# EUROPEAN PATENT APPLICATION

(11) **EP 2 722 318 A1**
(43) Date of publication of application: **23.04.2014**
(21) Application number: 12803126.7
(22) Date of filing: 20.06.2012
(51) Int. Cl.: C03C 27/12, B32B 17/10, C03B 23/025

(54) **METHOD FOR PRODUCING LAMINATED GLASS, AND LAMINATED GLASS**

(30) Priority: 20.06.2011 JP 2011136358
(71) Applicant: Asahi Glass Company, Limited, Tokyo 100-8405 (JP)
(72) Inventor: KITAJIMA, Yutaka, Tokyo 100-8405 (JP)
(74) Representative: Müller-Boré & Partner Patentanwälte PartG mbB
(86) International application number: PCT/JP2012/065770
(87) International publication number: WO 2012/176813

(57) **Abstract**

Provided is a process for producing laminated glass wherein even in a case where two glass plates among a plurality of glass plates have different plate thicknesses, the glass plates and an interlayer are sufficiently pressure bonded to reduce the distortion in the glass plates and to control the deterioration in visual quality.

A process for producing laminated glass by heating glass plates to a temperature close to a softening point to bend the glass plates includes a forming step for placing a plurality of glass plates 12 and 14 overlaid via a release agent on a ring mold 20 and bending the glass plates in a curved shape by gravity. In the forming step, at least two glass plates among the glass plates 12 and 14 have different plate thicknesses, the thinnest glass plate 14 has a plate thickness of less than 1.6 mm, and the plate thickness difference between the thinnest glass plate 14 and the thickest glass plate 12 is at least 0.5 mm. In the forming step, the glass plates 2 and 4 are placed on the ring mold 20 such that a thinner glass plate is disposed at a lower position.

## Description

### TECHNICAL FIELD

The present invention relates to a process for producing laminated glass, and laminated glass.

### BACKGROUND ART

As window glass for an automobile, laminated glass having two glass plates bent into a desired shape and an interlayer interposed therebetween has been widely used. The two glass plates have the same glass composition and the same plate thickness from the viewpoint of the cost in many cases. The interlayer is constituted by a resin, such as polyvinyl butyral (PVB), and prevents broken glass pieces from scattering.

As a forming method of bending glass plates into a desired shape, commonly employed is a gravity forming method of placing the glass plates on a ring-shape bottom mold (ring mold) supporting the glass plates from below and passing them through a heating furnace to heat and soften the glass plates and bend the glass plates by gravity into shape along the ring mold. A pressing method of sandwiching the glass plates preliminarily formed by gravity between the ring mold and a press mold, followed by pressing for main forming may also be employed.

In such a forming method, it is economically efficient to place the two glass plates overlaid each other on the ring mold and bending them simultaneously. In such a case, between the two glass plates, a release agent containing ceramic powder is preliminarily applied.

In recent years, thickness reduction of laminated glass has been studied for the purpose of weight saving of an automobile (see, for example, Patent Document 1).

Patent Document 1 proposes making a glass plate on the car exterior side thicker than the glass plate on the car interior side, considering a collision of flying objects, such as small stones, from outside with the automobile (so-called resistance performance against stone strike).

Window glass for an automobile is formed in a convex curved shape toward a side thereof that is disposed on the car exterior side at the time of attachment to a vehicle. In a case where the glass plate on the car exterior side is thicker than the glass plate on the car interior side, a thick glass plate and a thin glass plate are overlaid in this order on the ring mold, followed by heating and softening to bend them into a downwardly convex shape.

### PRIOR ART DOCUMENTS

### PATENT DOCUMENTS

Patent Document 1: JP-A-2003-55007

### DISCLOSURE OF INVENTION

### TECHNICAL PROBLEM

However, in a case where the two glass plates have different plate thicknesses, since the two glass plates have different bendabilities, it is difficult to bend the two glass plates similarly, and various problems will arise.

For example, in a case where a thick glass plate and a thin glass plate are overlaid in this order from below on a ring mold for supporting softened glass plates in a forming step, the thin glass plate is more likely to deform and sag down as compared with the thick glass plate, and the following problems (1) and (2), etc. may arise.
(1) The glass plates and the interlayer are not sufficiently pressure bonded at, e.g. the peripheral edge portions of the glass plates, thus leading to pressure bonding failure.
(2) Irregularities by the release agent or the like are transferred to a glass plate and remain as distortion on the glass plate even after bending, thus impairing visual quality.

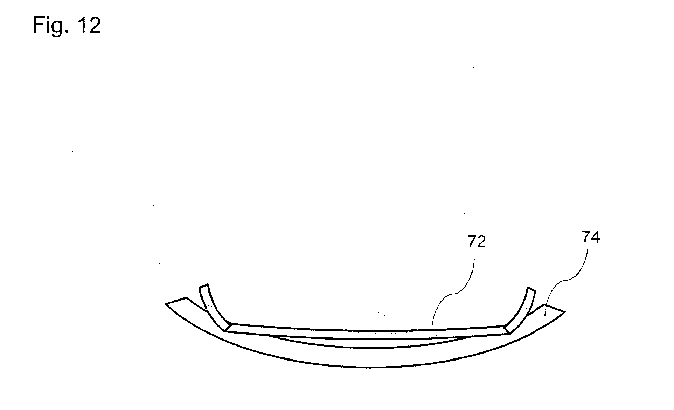

In particular, the distortion caused by the transferred irregularities pointed out item (2) noticeably occurs on parts of a glass plate on both lateral sides (in the vicinity of A-pillars), i.e. in the vicinity of both lateral sides of a glass plate which are disposed on both ends thereof in a horizontal direction at the time of attachment to a vehicle. Fig. 12 is a schematic cross-sectional view explaining the shape of a glass plate in a conventional bending process. The right-to-left direction in Fig. 12 shows the horizontal direction at the time of attachment to a vehicle. It has been known that a thin glass plate 72 softened on a ring mold is significantly deformable (in a so-called ship-like shape in section) on both lateral sides in comparison with a thick plate 74. This phenomenon is supposed to cause, e.g. a problem that when the thin bent glass plate 72 sags down, the thin bent glass is subjected to an increased contact pressure between the thin glass plate and the thick glass plate 74 under the thin glass plate in the vicinity of both lateral sides of the thin bent glass plate to have distortion remaining in the vicinity of the lateral sides of the thin bent glass plate, thus impairing visual quality or visibility.

Under these circumstances, the object of the present invention is to provide a process for producing laminated glass and laminated glass wherein even in a case where two glass plates among a plurality of glass plates have different plate thicknesses, the glass plates and an interlayer are sufficiently pressure bonded to reduce the distortion in the glass plates, in particular the distortion in parts of the glass plates in the vicinity of both lateral sides, to control the deterioration in the visual quality and to satisfy required physical properties, such as resistance performance against stone strike.

### SOLUTION TO PROBLEM

To achieve the above object, the present invention provides a process for producing laminated glass including a plurality of glass plates wherein at least two glass plates among the glass plates have different plate thicknesses, the process including:
a forming step for placing a plurality of glass plates overlaid via a release agent on a ring mold and heating the glass plates to a temperature close to a softening point to bend the glass plates in a curved shape;
a laminating step for laminating the bent glass plates with an interlayer being interposed between adjacent glass plates;
a pressure bonding step for pressure bonding the glass plates and the interlayer to form laminated glass;
the thinnest glass plate among the glass plates, having a plate thickness of less than 1.6 mm, and the plate thickness difference between the thinnest glass plate and the thickest glass plate among the glass plates being at least 0.5 mm; and
the forming step being carried out with the glass plates being placed on the ring mold such that a thinner glass plate is disposed at a lower position.

The present invention also provides laminated glass produced by placing a plurality of glass plates overlaid via a release agent on a ring mold and heating the glass plates to a temperature close to a softening point to bend the glass plates in a curved shape, laminating the bent glass plates with an interlayer being interposed between adjacent glass plates, and pressure bonding the glass plates and the interlayer; the laminated glass including:
at least two glass plates among the glass plates, having different plate thicknesses;
the thinnest glass plate among the glass plates, having a plate thickness of less than 1.6 mm, and the plate thickness difference between the thinnest glass plate and the thickest glass plate among the glass plates being at least 0.5 mm.

### ADVANTAGEOUS EFFECTS OF INVENTION

In accordance with the present invention, it is possible to provide a process for producing laminated glass and laminated glass wherein even in a case where two glass plates among a plurality of glass plates have different plate thicknesses, the two glass plates and an interlayer are sufficiently pressure bonded to reduce the distortion in the glass plates, in particular the distortion in parts of the glass plates in the vicinity of their both lateral sides, control the deterioration in visual quality and satisfy required physical properties, such as resistance performance against stone strike.

In accordance with the present invention, it is possible to reduce the occurrence of distortion points in glass plates and to control the deterioration in visual quality of the glass plates by placing the glass plates on a ring mold with the glass plates being overlaid so that a thinner glass plate is disposed at a lower position and bending the glass plates in the forming step in even a case where the thinnest glass plate among the glass plates has a plate thickness of less than 1.6 mm, and the plate thickness difference between the thinnest glass plate and the thickest glass plate among the glass plates is at least 0.5 mm. This advantage becomes significant in a case of the thinnest glass plate having a plate thickness of at most 1.3 mm, which is liable to be subjected to the occurrence of distortion points in the glass plate. This advantage becomes more significant in a case where the plate thickness difference between the thickest glass plate and the thinnest glass plate that is liable to be subjected to the occurrence of distortion points therein is at least 0.7 mm.

### BRIEF DESCRIPTION OF DRAWINGS

Fig. 1 is a view (1) illustrating the forming step in the process for producing laminated glass according to a first embodiment.
Fig. 2 is a view (2) illustrating the forming step in the process for producing laminated glass according to the first embodiment.
Fig. 3 is a cross-sectional view illustrating the glass laminate according to the first embodiment.
Fig. 4 is a cross-sectional view illustrating the laminated glass according to the first embodiment.
Fig. 5 is a schematic view showing the application directions of stresses applied to respective glass plates when two glass plates having different radiuses of curvature are laminated.
Fig. 6 is a graph schematically showing the plane stress distribution in the respective glass plates which are caused by residual distortions in the forming step.
Fig. 7 is a view (1) illustrating the forming step in the process for producing laminated glass according to a second embodiment.
Fig. 8 is a view (2) illustrating the forming step in the process for producing laminated glass according to the second embodiment.
Fig. 9 is a cross-sectional view of the glass laminate according to the second embodiment.
Fig. 10 is a cross-sectional view of the laminated glass according to the second embodiment.
Fig. 11 is a schematic view showing the distortion measuring positions in the first embodiment.
Fig. 12 is a schematic cross-sectional view showing the deformation in a glass plate in a conventional glass producing process.

### DESCRIPTION OF EMBODIMENTS

Now, embodiments of the present invention will be described in detail with reference to the drawings. However, it should be understood that the present invention is by no means restricted to the following embodiments, and various changes and modifications are possible without departing from the spirit and the scope of the present invention.

In the present invention, the wording "in the vicinity of lateral sides" means parts of laminated glass within a range of 100 mm from both lateral sides thereof which are disposed on both ends of the laminated glass in a horizontal direction at the time of attachment to an automobile, i.e. from both lateral sides close to the A-pillars of an automobile, and the wordings "right side" and "left side" are referred to in such a situation where the laminated glass attached to an automobile is viewed from the car-exterior side. The above-mentioned A-pillars are pillars disposed on both right and left sides of the windscreen (windshield) of an automobile.

### [First Embodiment]

### (Process for producing laminated glass)

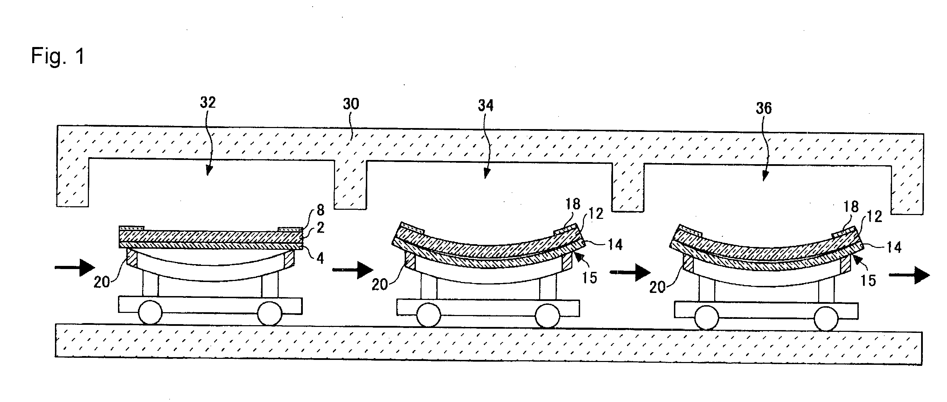

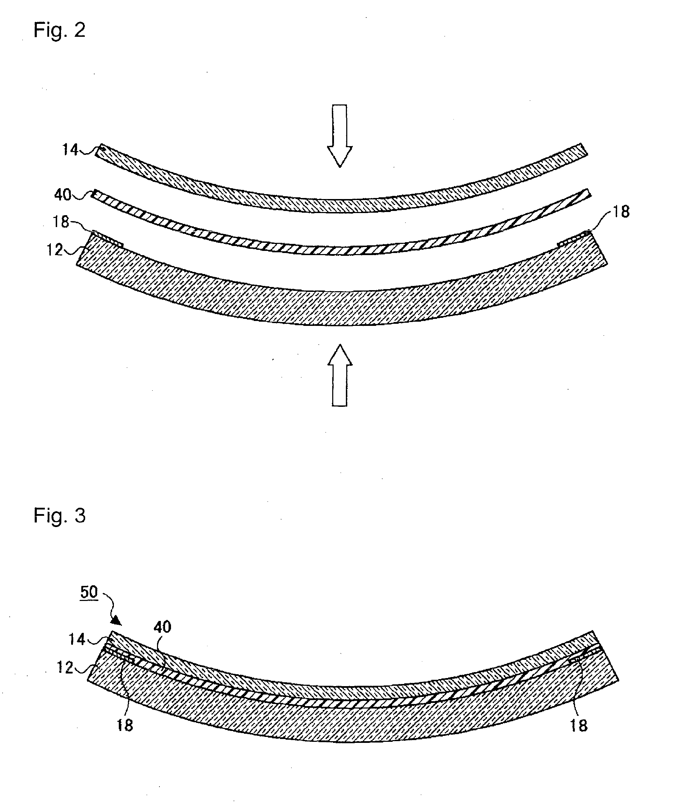

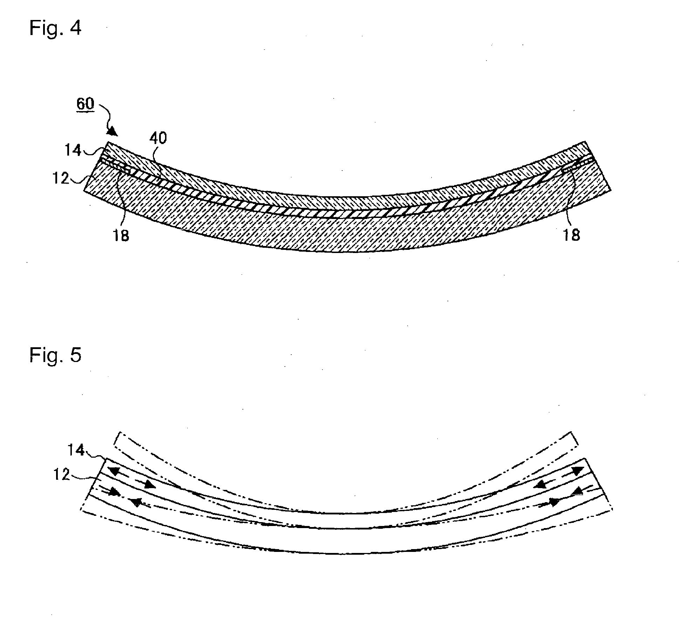

Fig. 1 is a view illustrating the forming step in the process for producing laminated glass according to a first embodiment of the present invention and showing some parts as section. Fig. 2 is a view illustrating the laminating step in the process for producing laminated glass according to the first embodiment of the present invention. Fig. 3 is a cross-sectional view illustrating the glass laminate (non-pressure bonded product) according to the first embodiment. Fig. 4 is a cross-sectional view illustrating the laminated glass according to the first embodiment.

The process for producing laminated glass includes a forming step, a laminating step and a pressure bonding step.

The forming step according to one mode of the present invention, as shown in Fig. 1, includes at least a step for placing a plurality (e.g. two) of glass plates 2 and 4 overlaid via a release agent on a ring mold 20 as a mold for bending glass plates by making use of gravity and heat the glass plates to a temperature close to a softening point to bend the glass plates by making use of gravity. The forming step may additionally include a step for causing the glass plates preliminarily bent by making use of gravity to be clamped between the mold (bottom mold) 20 and a press mold (top mold) (not shown) so as to be pressed.

When the glass plates have different softening points, the forming step is a step for heating the glass plates to a temperature close to the softening point of a glass plate having a higher softening point and bending them to a desired shape.

The glass plates 2 and 4 placed on the ring mold 20 are overlaid one above the other, and between adjacent glass plates, a release agent is applied. The release agent is to separate the adjacent glass plates so that they are easily separated from each other after forming. As the release agent, ceramic powder or the like which will does not react with the glass plates or which will not melt at a high temperature may be suitably used.

The glass plates 2 and 4 placed on the ring mold 20 may have the same glass composition or different glass compositions. When glass plates having the same glass composition are combined, it is easy to deal with raw glass plates (the raw glass plates mean glass plates used for producing laminated glass, which are planer glass plates not subjected to bending or other processing) and perform separation of cullets for recycle and to reduce production cost. When glass plates having different glass compositions are combined, it is possible to have advantages, such as sharing of a mold, combining of glass plates having different colors or addition of a function in terms of electromagnetic-wave transmittance by controlling physical properties, such as viscosity, so as to reduce the difference in behaviors due to the difference in plate thicknesses in the forming step.

As the raw glass plates used for the laminated glass according to the present invention and the process for producing the laminated glass, soda lime silicate glass plates, which have been widely as glass plates for automobiles, are normally used. Such glass plates may be colorless and transparent glass plates, colored and transparent glass plates, ultraviolet absorbing transparent glass plates or heat-ray absorbing transparent glass plates, or glass plates with another function added thereto. The laminated glass according to the present invention is constituted by at least two or three glass plates, and at least two glass plates among them have different plate thicknesses. It is characterized in that the thinnest glass plate among them has a plate thickness of less than 1.6 mm and that the thickness difference between the thinnest glass plate and the thickest glass plate among them is at least 0.5 mm.

The ring mold 20 is a supporting mold which is formed in a ring shape and supports glass plates 2 and 4 from below. The ring mold 20 is guided in a certain direction along a conveying system in a heating furnace 30. The inside of the heating furnace 30 is sectioned as a plurality of zones, such as a preheating zone for preheating glass plates 32, a forming zone for bending the glass plates 34 and an annealing zone for annealing the glass plates 36. Each of the zones includes a heater or the like to control the temperature therein.

The ring mold 20 passes through the preheating zone 32, the forming zone 34 and the annealing zone 36 in this order. The temperature in the forming zone 34 is set to a temperature suited for bending glass plates (normally, 550 to 650°C as a temperature close to the softening points). In the forming zone 34, the glass plates 2 and 4 placed on the ring mold 20 are heated to a temperature close to the softening points of the glass plates such that the glass plates 2 and 4 are bent in a desired curved shape, following the shape of the ring mold 20.

The ring mold 20 is formed into a frame-shape, and supports a peripheral portion of the glass plate 4 as the lowest position among the glass plates 2 and 4. The ring mold 20 may be formed as an integral body or may be divided in a circumferential direction. In the latter case, a plurality of divided peaces constituting the ring mold may relatively be moved or moved rotationally as the case requires to obtain a desired shape. Further, ring molds having partially different curvatures are overlaid in parallel with each other, and the supporting ring mold may be changed in accordance with the degree of bending of the glass plates.

In such a manner, in the forming step, the flat glass plates 2 and 4 are bent to obtain a plurality of glass plates 12 and 14 having a downwardly convex shape. The obtained glass plates 12 and 14 are sufficiently cooled in the annealing zone 36, followed by being cleaned to remove the release agent remaining after bending and then being subjected to the laminating step.

The laminating step is a step for laminating the bent glass plate 12 and 14 with an interlayer 40 interposed between adjacent glass plates as shown in Fig. 2. In other words, by reversing, in this step, the vertical disposition of the bent glass plates 12 and 14 disposed in the forming step, a glass laminate (non-pressure bonded product) 50 is obtained as shown in Fig. 3. The glass laminate 50 includes the at least two glass plates 12 and 14 having different plate thicknesses.

The interlayer 40 is constituted by a resin, such as polyvinyl butyral (PVB), and is interposed between the adjacent glass plate 12 and 14. The interlayer 40 prevents broken glass pieces from scattering when the after-mentioned laminated glass 60 is broken.

In the laminating step, a plurality of (for example, two) glass plates 12 and 14 in conformity with each other in the shape may be selected among the bent glass plates and laminated. For example, each of the glass plates 12 and 14 simultaneously bent on one ring mold 20 may be used for production different laminated glass.

The pressure bonding step is a step for pressure bonding the laminated glass plates 12 and 14 and the interlayer 40 to form laminated glass 60 as shown in Fig. 4. The laminated glass 60 is obtained, having a desired bent shape, by putting the glass laminate 50 obtained in the laminating step into an autoclave to heat and pressure bond the glass laminate.

The process for producing laminated glass may further include a formation step for forming a functional material layer 8 (see Fig. 1) on the surface of a glass plate, in addition to the above forming step, laminating step and pressure bonding step. The functional material is not particularly limited and may, for example, be an electrically conductive material, such as a metal material, or a decorating material, such as a heat resistant pigment.

In the formation step, ink containing a binder and a solvent (such as so-called black ceramic paste or conductive silver paste), in addition to the functional material, is applied to the surface of the glass plate and is dried to form the functional material layer 8. A plural types of functional material layers 8 may be formed on the surface of one glass plate. The functional material layer 8 is formed in a desired pattern.

The formation step may be carried out to a flat glass plate prior to the forming step, and in such a case, good coating operation property is obtained in comparison with the application of ink on a bent glass plate in a curved shape since the ink is applied to the surface of such a flat glass, whereby good coating operation property is obtained. As the method of applying the ink, for example, a screen printing method, a die coating method or the like may be mentioned.

The functional material layer 8, when fired, is baked on the surface of the glass plate to form a functional film 18 containing the functional material (see Fig. 1). The functional film 18 may, for example, be an electrically conductive film or electrically conductive wire or strip containing an electrically conductive material, and constitutes e.g. an antenna receiving a radio wave for TV broadcasting, AM/FM broadcasting or PHS, a heating electric wire for anti-icing or the like. Otherwise, the functional film 18 may be a decorating film containing a decorating material, which contains a heat resistant black pigment to restrict visibility from outside or restrict transmission of sunlight.

### (Details about process for producing laminated glass)

In this embodiment, the two glass plates 2 and 4 having different plate thicknesses are placed and bent on the ring mold such that a thinner glass plate is disposed at a lower position in the forming step as shown in Fig. 1. Specifically, the thin glass plate 4 is disposed under the thick glass plate 2. The number of the glass plates placed on the ring mold 20 is at least three, and at least two glass plates among them may have different plate thicknesses. In such a case, the glass plates are placed and bent on the ring mold 20 such that a thinner glass plate is disposed at a lower position. In a case where at least three glass plates are bent, when some of them have the same plate thickness, the glass plates having the same plate thickness are disposed so as to be adjacent each other. When the two glass plates 2 and 4 are bent in the forming step such that a thin glass plate is disposed at a lower position described above, two glass plates 12 and 14 thus obtained are bent such that the thin glass plate has a smaller radius curvature. The radius curvature of the thin glass plate 14 is slightly smaller than the radius curvature of the thick glass plate 12 as shown in Fig. 1. This is because a thin glass plate is liable to be sagged downward by heat in comparison with a thick glass plate. When at least three glass plates are bent such that a thinner glass plate is disposed at a lower position, the glass plates thus obtained are bent such that the thinner glass plate has a smaller radius curvature.

Since the two bent glass plates 12 and 14 can be deformed without being affected by each other for this reason, the contact pressure between the respective glass plates 12 and 14 and the release agent can be reduced. Thus, it is possible to control the occurrence of irregularities on the opposing surfaces of the respective glass plates 12 and 14 by the releasing agent or the like. Even in a case where at least three glass plates are dealt with, it is possible to reduce the contact pressure between the respective glass plates and the release agent since the glass plates are bent and deformed without being affected by each other.

After being bent, the glass plates have been placed in such a state that the concave curved surface of the thin glass plate 14 and the convex curved surface of the thick glass plate 12 are disposed to face each other. Here, "the convex curved shape" means a protruded curved surface of both principal surfaces of a glass plate, and "the concave curved surface" means a dent curved surface of both principal surfaces of a glass plate.

In this embodiment, the convex curved surface of the thin glass plate 14 and the concave curved surface of the thick glass plate 12 are disposed to face each other, in other words, the vertical disposition of the glass plates 12 and 14 is reversed, and the two glass plates 12 and 14 are laminated, having the interlayer 40 interposed therebetween in the laminating step as shown in Fig. 2. By laminating the glass plates as described above, it is possible to have the following first to fourth functions.

As the first function, the glass plate 14 among the two glass plates 12 and 14, which has been brought into contact with and supported by the ring mold 20 in the forming step, is laminated with the other glass plate 12, having the interlayer 40 interposed therebetween in the laminating step such that the traces of contact 15 (see Fig. 1) on the glass plate 14 caused by contact with the ring mold 20 is covered with the other glass plate 12. Thus, the irregularities of the traces of contact 15 on the glass plate 14 caused by contact with the ring mold 20 can be prevented from being exposed outside. Even in a case where at least three glass plates are dealt with, the irregularities of the traces of contact 15 on a glass plate that is caused by supporting the glass plate by the ring mold 20 with the glass plate being brought into contact with the ring mold can be also prevented from being exposed outside.

As the second function, the functional film 18 is disposed between the two glass plates 12 and 14 in the laminating step as shown in Fig. 2 when the functional film 18 is formed on a top surface of the glass plate 2 as the uppermost layer of the two glass plates 2 and 4 in the forming step. Thus, it is possible to eliminate a step specialized for firing the functional material layer 8 serving as the functional film 18 and to prevent the functional film 18 from being exposed outside such that the functional film 18 is protected. Even in a case where at least three glass plates are dealt with, it is possible to obtain a similar function because the functional film 18 is formed on a top surface of the glass plate as the uppermost layer among the glass plates.

Further, it is possible to cover the traces of contact 15 on the glass plate 14 caused by contact with the ring mold 20, with a functional film containing a heat resistant black pigment (i.e. decorating film) 18 formed on the other glass plate in the laminating step as shown in Fig. 3. Thus, it is possible to make it difficult to recognize from the car exterior side the irregularity of the traces of contact caused by the ring mold 20 when the laminated glass 60 is attached as window glass to the body of an automobile. The functional film 18 may be brought into contact with or be slightly apart from the thin glass plate 14 as long as the functional film can conceal the traces of contact 15 from outside.

As the third function, the two glass plates 12 and 14 having different plate thicknesses are overlaid and laminated one above the other such that the thicker glass plate is disposed at a position closer to the convex curved surface of the laminate glass 60 (the protruded curved surface of both principal surfaces of the laminated glass) in the laminating step as shown in Fig. 3. As a result, when the laminated glass 60 is attached as window glass to the body of an automobile, the thicker glass plate 12 can be disposed at a position closer to the car exterior side to improve durability against impact from the car exterior. Further, it is possible to improve durability against impact from the car exterior because the glass plate 12 having compressive stresses applied thereto in directions parallel to the outer periphery during lamination is disposed at a position closer to the car exterior side, although described in detail later. Even in a case where at least three glass plates are dealt with, it is possible to obtain a similar function because a thicker glass plate among them is disposed at a position closer to the car exterior side.

Fig. 5 is a schematic view showing the application directions of stresses applied to respective glass plates when the two glass plates having different radiuses of curvature are laminated. In Fig. 5, the state after lamination is shown in solid lines while the state before lamination are shown in two-dot chain lines.

Because the glass plate 12 having a larger radius of curvature has the radius of curvature reduced and the outer peripheral length shortened after lamination as shown in Fig. 5, compressive stresses are applied to the glass plate in the vicinity of the outer periphery in directions in parallel to the outer periphery. Thus, by carrying out the lamination as described above, it is possible to improve durability against impact from the car exterior because the glass plate 12 having compressive stresses applied thereto in directions parallel to the outer periphery during lamination is disposed at a position closer to the car exterior side.

As the fourth function, the two glass plates 12 and 14 are laminated to one above the other in the laminating step such that the glass plate 14 that has been disposed at a lower position during bending is disposed at a position closer to the convex curve surface of the laminated glass 60. Thus, when the laminated glass 60 is attached as window glass to the body of an automobile, it is possible to further improve the durability against impact from the car exterior because a glass plate that has been subjected to smaller maximum plane tensile stresses due to residual distortion in the forming step is disposed at a position closer to the car exterior side, although being described in detail later. Even in a case where at least three glass plates are dealt with, it is possible to obtain a similar function since a glass plate that has been subjected to smaller maximum plane tensile stresses due to residual distortion in the forming step is disposed at a position closer to the car exterior side.

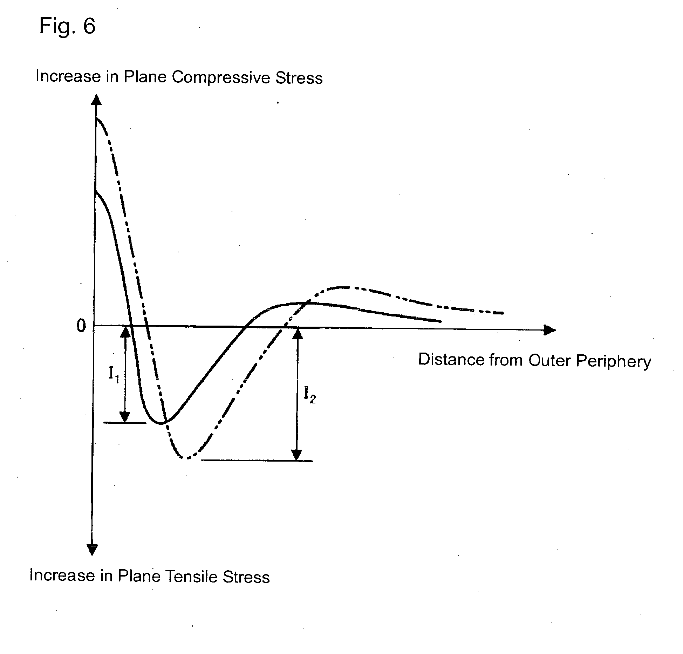

Fig. 6 is a graph schematically showing plane stress distributions in the respective glass plates which are caused by residual distortion in the forming step. The vertical axis indicates plane stresses in directions parallel in the outer peripheries of the respective glass plates 12 and 14 in the vicinity of the outer peripheries. On the other hand, the horizontal axis indicates distances from the outer peripheries of the respective glass plates 12 and 14. In Fig. 6, the plane stress distribution in the thick glass plate 12 is shown by a solid line while the plane stress distribution in the thin glass plate 14 is shown in a two-dot chain line.

The reason why the peripheral edge portions of the respective glass plates 12 and 14 are subjected to the maximum plane tensile stresses as shown in Fig. 6 is that the peripheral edge portions of the respective glass plates 12 and 14 are cooled slower than the remaining parts of the glass plates in the annealing zone 36 because the peripheral edge portions have a higher temperature than the remaining parts of the glass plates, being affected by the ring mold 20.

Further, the reason why the maximum plane tensile stress (I₁) in the thick glass plate 12 is smaller than the maximum plane tensile stress (I₂) in the thin glass plate 14 as shown in Fig. 6 is that the thick glass plate 12 is difficult to be thermally affected by the ring mold 20 in the annealing zone 36 because the thick glass plate 12 is farther from the ring mold 20 than the thin glass plate 14. This means that when the laminating step is carried out as described above, laminated glass can further improve the durability against impact from the car exterior since a glass plate having a smaller maximum plane tensile stress due to residual distortion in the forming step is disposed at a position closer to the car exterior.

Further, the reason why the maximum plane tensile stress (I₁) in the thick glass plate 12 is caused in a part of the thick glass plate closer to the outer periphery than the maximum plane tensile stress (I₂) in the thin glass plate 14 as shown in Fig. 6 is that the thick glass plate 12 is difficult to be thermally affected by the ring mold 20 in the annealing zone 36 because the thick glass plate is farther from the ring mold 20 than thin glass plate 14 as shown in Fig. 1.

When the stresses caused during the laminating step and the stresses caused in the forming step are added up, the thick glass plate 12 of the two adjacent glass plates 12 and 14 having different plate thicknesses is subjected to a smaller maximum plane tensile stress in the directions parallel in the outer periphery in a part thereof in the vicinity of the outer periphery than the thin glass plate 14 in the laminated glass 60. Thus, it is possible to improve the durability against impact from outside when the laminated glass 60 is attached as window glass to the body of an automobile.

### [Second Embodiment]

In the first embodiment, the number of the glass plates is two, and the two glass plates have different plate thicknesses in the glass plates and the laminated glass 60 placed on the ring mold 20.

On the other hand, the second embodiment is different from the first embodiment in that glass plates and laminated glass placed on a ring mold 20 have different structures from the ones according to the first embodiment. Specifically, in the glass plates and the laminated glass placed on the ring mold 20, the number of the glass plates are three, two glass plates among them have different plate thicknesses, and the remaining glass plate has the same plate thickness as a thicker glass plate of the two glass plates.

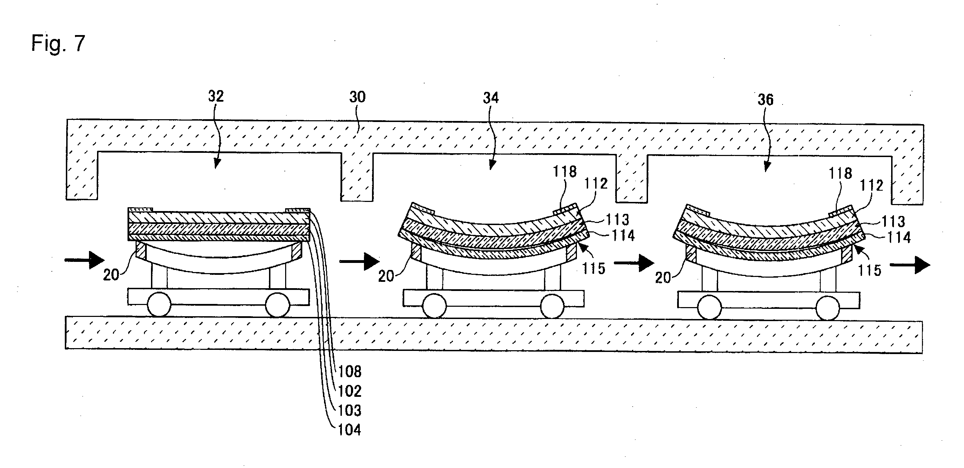

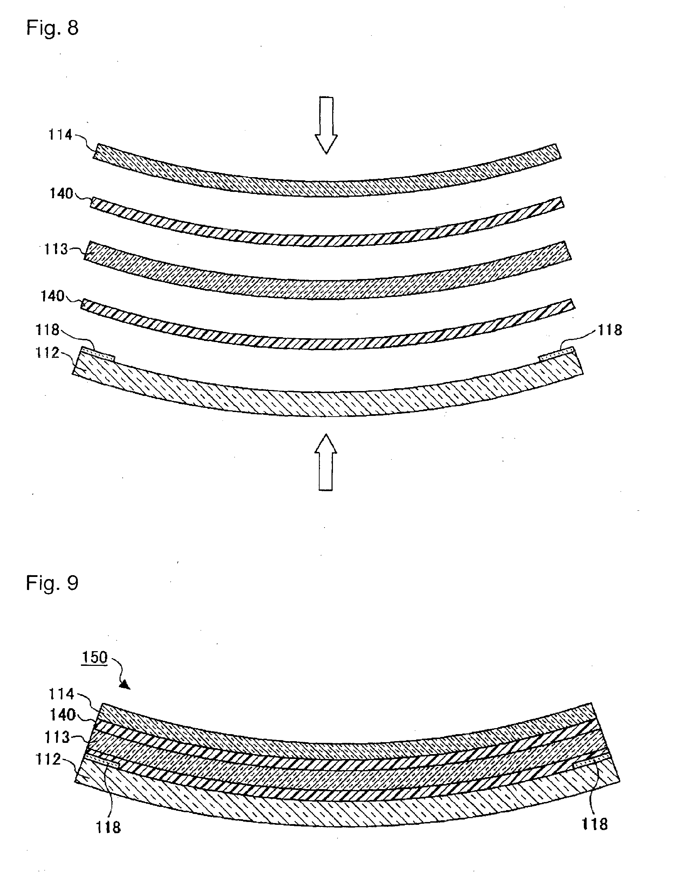

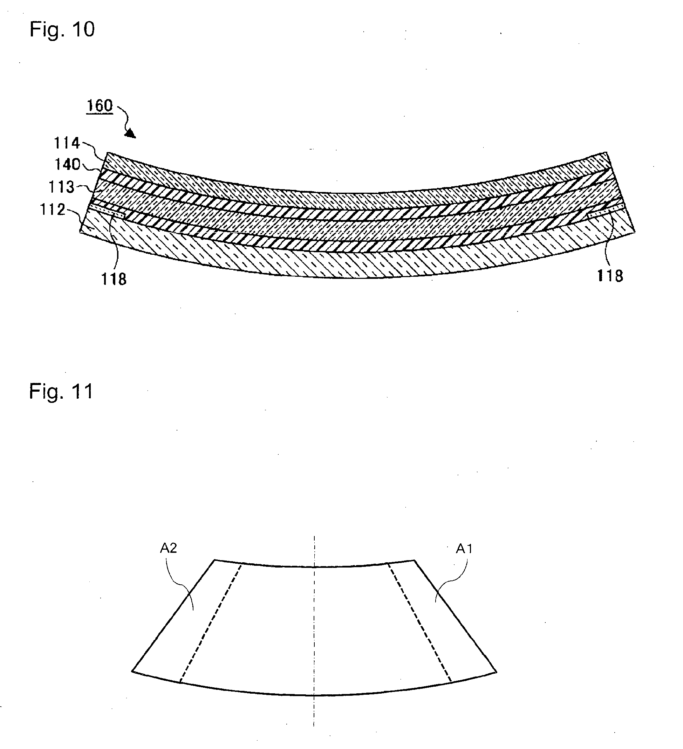

Fig. 7 is a view illustrating the forming step in the process for producing laminated glass according to the second embodiment of the present invention and showing some parts in section. Fig. 8 is a view illustrating the laminating step in the process for producing laminated glass. Fig. 9 is a cross-sectional view of the glass laminate according to the second embodiment. Fig. 10 is a cross-sectional view of the laminated glass according to the second embodiment.

The process for producing laminated glass according to this embodiment includes the forming step, the laminating step, a pressure boding step or the like as in the first embodiment. Although explanation of each step will be made in reference to the accompanying drawings, the same parts as those in the first embodiment are denoted by the same reference numerals, and explanation of such parts will be omitted.

The forming step according to one mode of the present invention includes at least a step for placing a plurality of glass plates 102, 103 and 104 (hereinbelow, also referred to the glass plates 102, 103 and 104 as the glass plates 102 to 104) overlaid via a release agent therebetween on the ring mold 20 and heating the glass plates to a temperature close to the softening points thereof in a forming zone 34 to bend the glass plates in a curved shape by gravity. The forming step may additionally include a step for pressuring the glass plates 102 to 104 preliminarily bent by gravity with the glass plates being clamped between the ring mold 20 and a press (not shown).

The glass plates 102 to 104 placed on the ring mold 20 are overlaid arranged one above the other, and between adjacent glass plates, a release agent is applied. The release agent is applied to be capable of preventing the glass plates 102 to 104 from being brought into direct contact with their adjacent glass plate in order to easily separate the glass plates after forming.

In the forming step, the glass plates 102 to 104 in a flat shape are bent to obtain a plurality of glass plates 112, 113 and 14 (hereinbelow, also referred to the glass plates 112, 113 and 114 as the glass plates 112 to 114) having a downwardly convex shape as shown in Fig. 7. The glass plates 112 to 114 thus obtained are sufficiently cooled in an annealing zone 36, followed by being cleaned to remove the releasing agent remaining after bending and then being subjected to the laminating step.

The laminating step is a step for laminating the glass plates 112 to 114 thus bent with an interlayer 140 being interposed between adjacent glass plates as shown in Fig. 8. In this step, the glass plates are placed in such a state that the convex curved surface of one of adjacent glass plates and the concave curved surface of the other glass plate are disposed to face each other.

The interlayer 140 is constituted by a resin, such as polyvinyl butyral (PVB), and is disposed between adjacent glass plates.

By the laminating step, a glass laminate (non-pressure bonded product) 150 is obtained as shown in Fig. 9. The glass laminate 150 includes the at least two glass plates 12 and 14 having different plate thicknesses.

The glass laminate 150 thus obtained is pressure bonded in the pressure bonding step using an autoclave such that laminated glass 160 is obtained so as to have a desired bent shape.

The process for producing laminated glass may further include a formation step for forming a functional material layer 108 (see Fig. 7) on the surface of a glass plate, in addition to the above-mentioned forming step, laminating step and pressure bonding step. The functional material layer 108 obtained in the formation step serves as a functional film 118 (see Fig. 7) baked so as to contain a functional material as described above.

According to this embodiment, at least two glass plates among the glass plates 102 to 104 have different plate thicknesses in the forming step as shown in Fig. 7. Specifically, two glass plates 102 and 104 among the glass plates 102 to 104 have different plate thicknesses. The remaining glass plate 103 has the same plate thickness as a thicker glass plate 102 of the two glass plates 102 and 104.

In the forming step, the glass plates 102 to 104 are placed on the ring mold 20 as a mold for bending by making use of gravity such that a glass plate having a thinner plate thickness is disposed at a lower position for the same reason as the one described above. Specifically, the thin glass plate 104 is disposed under the two thick glass plates 102 and 103. The glass plate 104 forming the lowermost layer among the glass plates 102 to 104 is brought into contact with and supported by the ring mold 20.

Thus, it is possible to reduce the contact pressure between the respective glass plates 112 to 114 to be bent and the release agent because the glass plates 112 to 114 are not prevented from being deformed one another. Accordingly, it is possible to control the occurrence of irregularities due to the release agent or the like on the confronting surfaces of the respective glass plates 112 to 114.

According to this embodiment, the glass plate 114 among the glass plates 112 to 114, which has been brought into contact with and supported by the ring mold 20 in the forming step, is laminated with another glass plate 113, having the interlayer 140 interposed therebetween, such that the traces of contact 115 (see Fig. 1) on the glass plate 114 caused by contact with the ring mold 20 is covered with the glass plate 113.

As described above, it is possible to obtain similar functions and advantages as the above-mentioned first to fourth functions according to this embodiment. These advantages can be obtained irrespective of the order of the two glass plates 112 and 113 having the same plate thickness.

### EXAMPLES

Now, the present invention will be described in further detail with reference to Examples etc. However, it should be understood that the present invention is by no means restricted to such Examples.

### [Example 1]

In Example 1, two flat glass plates (soda lime glass) were prepared. The two glass plates had the same glass composition as each other and different plate thicknesses such that a thick glass plate had a plate thickness of 2.0 mm while the thin glass plate had a plate thickness of 1.1 mm.

Then, to the surface of the thick glass plate, ink obtained by mixing glass frit, a heat resistant black pigment and an organic vehicle (so-called black ceramic paste) was applied and dried to form a decorating material layer (functional material layer).

Subsequently, the thin glass plate having a plate thickness of 1.1 mm and the thick glass plate having a plate thickness of 2.0 mm were placed on the top side of a ring mold in such an order that the thin glass plate was overlaid under the thick glass plate as shown in Fig. 1, such that the decorating material layer was disposed on the top side of the thick glass plate. Before the two glass plates were overlaid, a release agent containing ceramic powder was spread between the two glass plates.

The release agent is to separate adjacent glass plates such that they are easily separated from each other after forming. As the release agent, ceramic powder or the like which will not react with a glass plate or which will not melt at a high temperature (at least 800°C) may be suitably used.

Then, the ring mold on which the two glass plates were placed was moved from the inlet of a heating furnace to a forming zone via a pre-heating zone to heat the two glass plates, whereby the softened two glass plates were bent into a shape along the ring mold by gravity and in addition, the decorating material layer was subjected to treatment for removal of the binder and then fired to form a decorating film (functional film). In this state, the concave curved surface of the thin glass plate and the convex curved surface of the thick glass plate faced each other. Then, the ring mold was moved from the forming zone to the annealing zone, followed by being cooled and being discharged from the outlet of the heating furnace, carrying the glass plates thereon.

Then, the two glass plates were sufficiently cooled on the top side of the ring mold, followed by being taken out from the ring mold, and the release agent was removed from the glass plates by cleaning.

Subsequently, when the glass plates were laminated, having the interlayer interposed between adjacent glass plates in the laminating step, the order of the glass plates on the ring mold was reversed so as to place the thick glass plate at a lower position and the thin glass plate at a higher position such that the concave curved surface of the thick glass plate and the convex curved surface of the thin glass plate were faced each other. Further, the two glass plates were laminated via the interlayer of polyvinyl butyral (PVB) to obtain a glass laminate (non-pressure bonded product). The glass laminate was heated and pressure bonded in an autoclave to obtain laminated glass having a desired bent shape.

### [Examples 2 to 4]

In each of Examples 2 to 4, two glass plates having the plate thicknesses shown in Table 1 were overlaid each other and placed on the mold in an order different from Table 1. Laminated glass was prepared in the same manner as Example 1 except for the plate thicknesses.

### [Examples 5 to 8]

In each of Examples 5 to 8, two glass plates having the plate thicknesses shown in Table 1 were overlaid each other and placed on the mold in an order different from Table 1.

First, in each of the Examples, the two flat glass plates (soda lime glass) having a combination of plate thicknesses shown in Table 1 were prepared. These two glass plates had the same glass composition as each other and different plate thicknesses.

Next, unlike Example 1, to the surface of the thin glass plate, ink obtained by mixing glass frit, a heat resistant black pigment and an organic vehicle in the same manner as Example 1 was applied and dried to form a decorating material layer.

Subsequently, the thick glass plate and the thin glass plate were placed on the top side of the ring mold in such an order that the thin grass plate was located at an upper position, and were subjected to the forming step, such that the decorating material layer was disposed on the top side of the thin glass plate.

The glass plates thus formed were laminated on the same order as those on the ring mold to form a glass laminate (non pressure bonded product) such that the thick glass plate and the thin glass plate were placed at a lower position and at an upper position, respectively, when the glass plates were laminated, having the interlayer disposed therebetween, in the laminating step. The glass laminate was heated and pressure bonded in the autoclave to obtain laminated glass having a desired curves shape. The laminated glass was fabricated under the same conditions as Example 1 except for the above-mentioned conditions.

The plate thicknesses of the glass plates, the positions of the glass plates during forming and the evaluation results of the laminated glass in each of the examples are shown in Table 1.

The presence and absence of distortion points was determined according to the standard of visual inspection, which was carried out by seeing through products for product shipment. With regard to the number of the distortion points, the number of distortion points that a driver was able to at least visually recognize in light of a reference sample for product failure was counted as distortion points. Fig. 11 is a view showing the evaluation areas for the distortion points. As shown in this figure, the evaluation was carried out about the distortion points in parts of each laminated glass in the vicinity of its both lateral sides, i.e. parts of each laminated glass within a range of 100 mm from its both lateral sides (right lateral side A1 and left lateral side A2).

**TABLE 1**

| Ex. | Position of thin glass plate during forming | Glass plate thickness | | Difference in plate thickness | Number of distortion points in right lateral side (A1) | Number of distortion points in left lateral side (A2) | Total numbers of distortion points | Trace of contact on laminated glass |
|---|---|---|---|---|---|---|---|---|
| | | Thick plate (mm) | Thin plate (mm) | | | | | |
| 1 | Lower position | 2.0 | 1.1 | 0.9 | 0 | 0 | 0 | Not exposed |
| 2 | Lower position | 2.0 | 1.3 | 0.7 | 0 | 0 | 0 | Not exposed |
| 3 | Lower position | 1.8 | 1.3 | 0.5 | 0 | 0 | 0 | Not exposed |
| 4 | Lower position | 1.8 | 1.1 | 0.7 | 0 | 0 | 0 | Not exposed |
| 5 | Upper position | 2.0 | 1.1 | 0.9 | 10 | 3 | 13 | Exposed |
| 6 | Upper position | 1.8 | 1.1 | 0.7 | 6 | 4 | 10 | Exposed |
| 7 | Upper position | 2.0 | 1.8 | 0.2 | 0 | 0 | 0 | Exposed |
| 8 | Upper position | 2.0 | 2.0 | 0 | 0 | 0 | 0 | Exposed |

When the laminated glass obtained in each of Examples 1 to 4 was visually observed, the glass plates and the interlayer were sufficiently pressure bonded, and no failure in appearance due to glass distortion was observed. In each Example, the irregularities of the traces of contact with the ring mold was not exposed to the exterior side of the laminated glass, and the decorating film was disposed between the interlayer and its adjacent glass plate.

The laminated glass obtained in each of Example 5 and Example 6 was visually observed. In each Example, perspective distortion that the driver was able to recognize when using the laminated glass as a vehicle glass window is caused in parts of the laminated glass in the vicinity of its both lateral sides, due to glass distortion points caused by irregularities or the like of the release agent remaining the glass surface during forming. In each Example, the irregularities of the traces of contact with the ring mold was exposed outside. Further, the decollating film was exposed outside the laminated glass.

The laminated glass obtained in each of Example 7 and Example 8 was visually observed. In each Example, the glass plates and the interlayer were sufficiently press bonded, and no failure in appearance due to glass distortion was observed in the parts of the lateral glass in the vicinity of its both lateral sides. On the other hand, in each Example, the irregularities of the traces of contact with the ring mold was exposed outside. Further, the decollating film was exposed outside the laminated glass.

From the point of view of the above-mentioned results, as also shown from Examples 7 and 8, no distortion points are caused in the parts of the produced laminated glass in the vicinity of its lateral sides when the thinnest glass plate among a plurality of glass plates has a plate thickness of larger than 1.6 mm and when the glass plates are laminated and formed so as to place a thicker glass plate at a lower position at the time of forming a raw glass plate for laminated glass wherein the thickness difference between the thinnest glass plate and the thickest glass plate is less than 0.5 mm. In other words, the application of the present invention is not necessary in this case. However, these structures have almost no advantage or a small advantage of weight reduction in comparison with the conventional laminated glass.

As also shown from Examples 5 and 6, distortion points are caused in the parts of the produced laminated glass in the vicinity of its both lateral sides when the thinnest glass plate among a plurality of glass plates has a plate thickness of less than 1.6 mm and when the glass plates are laminated and formed so as to place a thicker glass plate at a lower position at the time of forming a base plate for laminated glass wherein the thickness difference between the thinnest glass plate and the thickest glass plate among the glass plates is at least 0.5 mm.

In contrast, when laminated glass was produced according to the production process or overlaying position according to one mode of the present invention, the laminated glass was obtained such that no distortion point was caused in the parts of the laminated glass in the vicinity of its both lateral sides and that the glass plates are sufficiently pressure bonded together. The laminated glass was obtained in such a state that no decorating film was exposed to the exterior side of the laminated glass and that the decorating film was capable of being easily disposed between the interlayer and its adjacent glass plate.

Table 2 shows evaluation results about each thin glass plate (not combined with a thick glass plate) that was been formed and annealed but was not yet laminated with an interlayer. With regard to the sample in each of Examples 11 to 18, the evaluation was carried out such that only a thin glass plate obtained by overlaying two glass plates having the plate thicknesses shown in Table 2 and forming the glass plates on the ring mold in the same manner as Examples 1 to 8 but prior to forwarding the glass plates to the laminating step was used as a sample.

Table 2 shows the results that were obtained by placing, on an inspection table, only the thin glass plates prepared as described above, seeing through the thin glass plates to carry out visual inspection, and counting the distortion points that a driver was able to at least visually recognize in the above-mentioned areas A1 and A2.

With regard to the distortion points of each laminated glass shown in Table 1, when the thin glass plate is placed at a lower position during forming as in each of Examples 1 to 4, the distortion points was observed in black by a concave lens effect because the concaves in the glass plate that caused the distortion points are exposed on the surface and are located at a back-to-back position. On the other hand, when the thin glass plate is placed at an upper position during forming as shown in each of Examples 5 to 8, the distortion points was observed in white by a convex lens effect because the concaves in the glass plate that cause the distortion points are not exposed on the surface and are located at a confronting position.

On the other hand, when a distortion inspection is carried out by seeing through only thin glass plates that have not been laminated with a thick glass plate to prepare laminated glass, it is possible to further unify the evaluation standard because the absence of the above-mentioned concave lens effect and convex lens effect does not cause the inversion of white/black in seeing the distortion points between the present invention and the prior art.

**TABLE 2**

| Ex. | Overlaying position | Glass plate thickness | | Difference in plate thickness | Number of distortion points in right lateral side (A1) | Number of distortion points in left lateral side (A2) | Total numbers of distortion points |
|---|---|---|---|---|---|---|---|
| | | Thick plate (mm) | Thin plate (mm) | | | | |
| 1 | Lower position | 2.0 | 1.1 | 0.9 | 0 | 0 | 0 |
| 2 | Lower position | 2.0 | 1.3 | 0.7 | 0 | 0 | 0 |
| 3 | Lower position | 1.8 | 1.3 | 0.5 | 0 | 0 | 0 |
| 4 | Lower position | 1.8 | 1.1 | 0.7 | 0 | 0 | 0 |
| 5 | Upper position | 2.0 | 1.1 | 0.9 | 4 | 1 | 5 |
| 6 | Upper position | 2.0 | 1.3 | 0.7 | 6 | 4 | 10 |
| 7 | Upper position | 1.8 | 1.3 | 0.5 | 5 | 1 | 6 |
| 8 | Upper position | 1.8 | 1.1 | 0.7 | 1 | 5 | 6 |

When the thin glass plate obtained in each of Examples 11 to 14 was visually observed, no defect in appearance due to distortion of the glass plate was observed in the areas A1 and A2 in the vicinity of both lateral sides.

When the laminated glass obtained in each of Examples 15 to 18 was visually observed, perspective distortions that a driver was able to at least visually recognize at the time of using the laminated glass as a vehicle window glass was caused in the areas A1 and A2 of the laminated glass in the vicinity of its both lateral sides by distortion points in a glass plate which was caused by e.g. irregularities of the release agent remaining on the glass plate during forming.

From the point of view of the above-mentioned results, even when the thin glass plate obtained in each of Examples 11 to 14 is used to produce laminated glass, it is highly unlikely that distortion points were caused in the areas A1 and A2 in the vicinity of both lateral sides.

In the present invention, even when among a plurality of glass plates, the thinnest glass plate has a plate thickness of less than 1.6 mm, and when the thickness difference between the thinnest glass plate and the thickest glass plate is at least 0.5 mm, it is possible to reduce the occurrence of distortion points in a glass plate and to prevent visual quality from being impaired by placing the glass plates on a ring mold such that a thinner glass plate is disposed at a lower position in the forming step. The advantage of the present invention becomes more significant when the thinnest glass plate, which is liable to be subjected to the occurrence of distortion points, has a plate thickness of at most 1.3 mm. The advantage of the present invention becomes furthermore significant when the plate thickness difference between the thickest glass plate and the thinnest glass plate, which is liable to be subjected to the occurrence of distortion points, is at least 0.7 mm.

In the laminated glass according to one embodiment of the present invention, it is preferred that among a plurality of glass plates, the thickest glass plate be laminated so as to be disposed on the car exterior side at the time of attachment to a vehicle. Such lamination is helpful to increase the resistance performance against flying object, such as small stones, when the laminated glass is used as a vehicle window glass. In this case, the glass plate that is laminated on the most car exterior side has a plate thickness of preferably at least 1.8 mm and more preferably at least 1.95 mm. On the other hand, it is not preferred from the point of view of an increase in weight that the glass plate that is laminated on the most car exterior side have a plate thickness of at least 2.1 mm.

In the laminated glass according to one embodiment of the present invention, it is preferred that among a plurality of glass plates, the thinnest glass plate be not laminated so as to be disposed on the most car exterior side at the time of attachment to a vehicle. In such a case, the thinnest glass plate has a plate thickness of preferably at least 0.7 mm and more preferably of at least 1.0 mm. Although a thinner glass plate contributes a reduction in weight, it becomes difficult to carry out bending in a conventional bending production equipment or conditions wherein bending is carried out by heating the glass plates to a temperature close to a softening point because such a thinner glass plate has a smaller heat capacity.

Although it is possible to apply ink on a thick glass plate and dry the ink to form a functional material layer as in Example 1 and Example 2 such that the functional film, such as a decorating film, is prevented from being exposed outside laminated glass, the number of required steps is increased in this case because the forming step is needed to be carried out after preliminary firing the functional material layer. If the forming step is carried out such that a functional material layer is interposed between two glass plates without being preliminarily fired, the two glass plates are bonded via the functional material layer and cannot be separated from each other after the forming step.

### INDUSTRIAL APPLICABILITY

In accordance with the present invention, it is possible to provide a process for producing laminated glass and laminated glass wherein even in a case where two glass plates among a plurality of glass plates have different plate thicknesses, the two glass plates and an interlayer are sufficiently pressure bonded to reduce the distortion in the glass plates, in particular the distortion in parts of the glass in the vicinity of its both lateral sides control the deterioration in the visual quality and satisfy required physical properties, such as resistance performance against stone strike. In particular, the present invention is useful for production of laminated glass for an automobile.

The entire disclosure of Japanese Patent Application No. 2011-136358 filed on June 20, 2011 including specification, claims, drawings and summary is incorporated herein by reference in its entirety.

### REFERENCE SYMBOLS

2: Thick glass plate
4: Thin glass plate
8: Functional material layer
12: Bent thick glass plate
14: Bent thin glass plate
15: Trace of contact with ring mold
18: Functional film
40: Interlayer
50: Glass laminate (non-pressure bonded product)
60: Laminated glass

## Claims

1. A process for producing laminated glass including a plurality of glass plates wherein at least two glass plates among the glass plates have different plate thicknesses, the process comprising:
a forming step for placing a plurality of glass plates overlaid via a release agent on a ring mold and heating the glass plates to a temperature close to a softening point to bend the glass plates in a curved shape;
a laminating step for laminating the bent glass plates with an interlayer being interposed between adjacent glass plates;
a pressure bonding step for pressure bonding the glass plates and the interlayer to form laminated glass;
the thinnest glass plate among the glass plates, having a plate thickness of less than 1.6 mm, and the plate thickness difference between the thinnest glass plate and the thickest glass plate among the glass plates being at least 0.5 mm; and
the forming step being carried out with the glass plates being placed on the ring mold such that a thinner glass plate is disposed at a lower position.

2. The process for producing laminated glass according to Claim 1, wherein the laminated glass includes two glass plates having different plate thicknesses, the process comprising:
the forming step for placing the two glass plates overlaid via the release agent on the ring mold and heating the glass plates to the temperature close to the softening point to bend the glass plates in the curved shape;
the laminating step for laminating the bent glass plates with the interlayer being interposed between the glass plates;
the pressure bonding step for pressure bonding the glass plates and the interlayer to form the laminated glass;
a thin glass plate of the two glass plates, having a plate thickness of less than 1.6 mm, and the plate thickness difference between the thin glass plate and the thick glass plate being at least 0.5 mm; and
the forming step being carried out with the two glass plates being placed on the ring mold such that the thin glass plate is disposed at a lower position.

3. The process for producing laminated glass according to Claim 1 or 2, wherein the laminating step is carried out in such a way that a first glass plate among the glass plates, which is brought into contact with and supported by the ring mold in the forming step, is laminated with a second glass plate via the interlayer such that a trace of contact on the first glass plate caused by contact with the ring mold is covered with the second glass plate.

4. The process for producing laminated glass according to any one of Claims 1 to 3, wherein the forming step is carried out so as to form a functional film on a top side of a glass plate as the uppermost layer among the glass plates; and
the laminating step is carried out so as to interpose the functional film between the two glass plates.

5. The process for producing laminated glass according to any one of Claims 1 to 4, wherein the laminating step is carried out in such a way that at least two glass plates among the glass plates have different plate thicknesses and that the glass plates are disposed such that a thicker glass plate is disposed on a side close to a convex curved surface of the laminated glass.

6. The process for producing laminated glass according to any one of Claims 1 to 5, wherein the laminating step is carried out in such a way that the glass plates are laminated such that a glass plate disposed at a lower position during bending is disposed on a side close to the convex curved surface of the laminated glass.

7. The process for producing laminated glass according to any one of Claims 1 to 6, wherein the thinnest glass plate among the glass plates has a plate thickness of at least 0.7 mm and less than 1.6 mm.

8. Laminated glass produced by placing a plurality of glass plates overlaid via a release agent on a ring mold and heating the glass plates to a temperature close to a softening point to bend the glass plates in a curved shape, laminating the bent glass plates with an interlayer being interposed between adjacent glass plates, and pressure bonding the glass plates and the interlayer; the laminated glass comprising:
at least two glass plates among the glass plates, having different plate thicknesses;
the thinnest glass plate among the glass plates, having a plate thickness of less than 1.6 mm, and the plate thickness difference between the thinnest glass plate and the thickest glass plate among the glass plates being at least 0.5 mm.

9. The laminated glass according to Claim 8, wherein the laminated glass is produced by placing two glass plates overlaid via the release agent on the ring mold and heating the glass plates to the temperature close to the softening point to bend the glass plates in the curved shape, laminating the bent glass plates with the interlayer being interposed between the glass plates, and pressure bonding the glass plates and the interlayer; the laminated glass comprising:
the two glass plates having different plate thicknesses;
a thin glass plate of the two glass plates having a plate thickness of less than 1.6 mm, and the plate thickness difference between the thin glass plate and the thick glass plate being at least 0.5 mm.

10. The laminated glass according to Claim 8 or 9, wherein a first glass plate among the glass plates, which is brought into contact with and supported by the ring mold in the forming step, is laminated with a second glass plate via the interlayer such that a trace of contact on the first glass plate caused by contact with the ring mold is covered with the second glass plate.

11. The laminated glass according to any one of Claims 8 to 10, wherein at least two glass plates among the glass plates overlaid on the ring mold have different plate thicknesses, and the glass plates are disposed such that a thinner glass plate is disposed at a lower position; and
wherein the thinnest glass plate comprises a glass plate which is brought into contact with and supported by the ring mold in during forming.

12. The laminated glass according to any one of Claims 8 to 11, having a functional film in a peripheral portion, the trace of contact being concealed by the functional film.

13. The laminated glass according to any one of Claims 8 to 12, wherein the glass plates are disposed such that a thicker glass plate is disposed on a side close to a convex curved surface of the laminated glass, and a thick glass plate of two adjacent glass plates having different plate thicknesses is subjected to a smaller maximum plane tensile stress in parts thereof close to an outer periphery in directions parallel to the outer periphery than the thin glass plate.

14. The laminated glass according to any one of Claims 8 to 13, wherein the thick glass plate has a maximum plane tensile stress caused in parts thereof closer to the outer periphery than the maximum plane tensile stress in the thin glass plate.

15. The laminated glass according to any one of Claims 8 to 14, wherein the thinnest glass plate among the glass plates has a plate thickness of at least 0.7 mm and less than 1.6 mm.
